# EUROPEAN PATENT APPLICATION

(11) **EP 4 821 575 A1**
(43) Date of publication of application: **14.10.2026**
(21) Application number: 26171083.4
(22) Date of filing: 08.04.2026
(51) Int. Cl.: A63F 13/67, A63F 13/79, A63F 13/798, A63F 13/833

(54) **INFORMATION PROCESSING DEVICE, INFORMATION PROCESSING METHOD, AND INFORMATION PROCESSING PROGRAM**

(30) Priority: 11.04.2025 JP 2025065447
(71) Applicant: SNK Corporation, Osaka-shi, Osaka 5320003 (JP)
(72) Inventor: HASHIMOTO, Omito, OSAKA-SHI, OSAKA (JP); ANDO, Seiji, OSAKA-SHI, OSAKA (JP); ITSUKI, Kosuke, OSAKA-SHI, OSAKA (JP); TOMARI, Hisanobu, OSAKA-SHI, OSAKA (JP)
(74) Representative: Algemeen Octrooi- en Merkenbureau B.V.

(57) **Abstract**

An information processing device (100) includes: an acceptance unit (151) configured to accept designation of a plurality of other users for a match in a fighting game; an acquisition unit (152) configured to acquire, for each of the other users, operation information regarding an operation performed by the user on an operation target during the match in the fighting game, and situation information indicating a situation in the fighting game at a time of the operation; a model generator (153) configured to learn the operation information and the situation information to generate a behavior model that causes the operation target to act using AI; and a provision unit (154) configured to provide a match against the operation target that acts in accordance with the behavior model.

## Description

### BACKGROUND OF THE INVENTION

### 1. Field of the Invention

The present invention relates to an information processing device capable of providing a CPU character that mimics a character operated by a user, and to an information processing method and an information processing program for the same.

### 2. Description of Related Art

With the rise of e-sports in recent years, fighting games have also gained momentum. In addition, as communication technology has improved, communication delays have become shorter, and online competitions are becoming more popular. Japanese Unexamined Patent Application Publication No. 2003-144744 discloses a technique in which a game system reproduces the actions of a character in charge on the basis of past operations by players.

### SUMMARY OF THE INVENTION

The technology described in patent document 1 above may be used to provide a character operated by a CPU that performs actions by copying movements of a certain user; however, the actions are merely copies and do not exceed the actions of the user. Some users may wish to play against a character that performs actions superior to those of the character operated by the CPU that copies movements of the user.

Accordingly, an object of the present invention is to provide an information processing device that is capable of generating a character that can perform actions superior to those of the user to be imitated.

To solve the above problems, an information processing device according to an aspect of the present invention includes: an acceptance unit configured to accept designation of a plurality of other users for a match in a fighting game; an acquisition unit configured to acquire, for each of the other users, operation information regarding an operation performed by the user on an operation target during the match in the fighting game, and situation information indicating a situation in the fighting game at a time of the operation; a model generator configured to learn the operation information and the situation information to generate a behavior model that causes the operation target to act using AI; and a provision unit configured to provide a match against the operation target that acts in accordance with the behavior model.

To solve the above problems, an information processing method according to an aspect of the present invention causes a computer to execute the steps of: accepting designation of a plurality of other users for a match in a fighting game; acquiring, for each of the other users, operation information regarding an operation performed by the user on an operation target during the match in the fighting game, and situation information indicating a situation in the fighting game at a time of the operation; generating a behavior model that causes the operation target to act using AI by learning the operation information and the situation information; and providing a match against the operation target that acts in accordance with the behavior model.

To solve the above problems, an information processing program according to an aspect of the present invention causes a computer to embody the functions of: accepting designation of a plurality of other users for a match in a fighting game; acquiring, for each of the other users, operation information regarding an operation performed by the user on an operation target during the match in the fighting game, and situation information indicating a situation in the fighting game at a time of the operation; generating a behavior model that causes the operation target to act using AI by learning the operation information and the situation information; and providing a match against the operation target that acts in accordance with the behavior model.

Further, in the above information processing device, the fighting game may be a fighting game in which a first user operates a first character and plays against a second character operated by a second user, and a character serving as the operation target for each of the other users may be the same character.

Moreover, in the above information processing device, the character as the operation target may have a basic behavior policy, and the model generator may generate the behavior model by performing learning in which operation information and situation information of each of the other users are added to the basic behavior policy.

Furthermore, in the above information processing device, the acceptance unit may accept, from one user, the designation of the other users from ranking information on the basis of a match record in the fighting game.

In addition, in the above information processing device, the acceptance unit may accept, from the one user, specific weights for the other users, and the model generator may perform the learning according to the specific weights.

The information processing device according to the present invention provides a CPU character that has learned the operations of a plurality of other users selected by the user to allow the user to play against by a character operated by the user. Accordingly, for example, even if the opponent desired by the user is offline, the user can improve his or her skills by playing against a CPU character that moves in a similar way to the opponent but is also capable of performing actions that the opponent would not perform.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a system diagram illustrating an example of a configuration of a game system,
FIG. 2 shows a block diagram illustrating an example of a configuration of an information processing device,
FIG. 3 shows a block diagram illustrating an example of a configuration of a gaming terminal,
FIG. 4 shows a table illustrating an example of ranking information,
FIG. 5 shows a flowchart illustrating an example of an operation of the information processing device when it is learning, and
FIG. 6 shows a flowchart illustrating an example of an operation of the information processing device when a character is operated by a computer.

### DETAILED DESCRIPTION OF EMBODIMENTS

An information processing device according to the present invention will be described below with reference to the drawings.

### Embodiments

### Overview

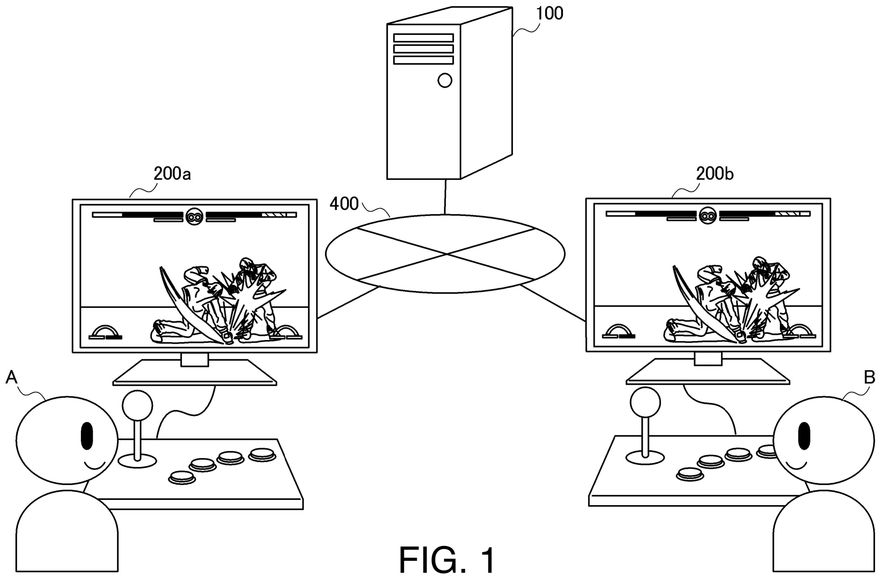

FIG. 1 shows a system diagram illustrating an example of a configuration of a game system according to a present embodiment. As shown in FIG. 1, a game system is configured by an information processing device 100 and gaming terminals 200a, 200b (hereinafter, referred to as gaming terminal 200 when no distinction is needed), where users enjoy games, connected via a network 400. Here, the game may correspond to a fighting game, and may include a user-versus-CPU mode in which a user competes against a CPU character controlled by a computer using a character operated by the user, and a user-versus-user mode in which users compete against each other using their respective characters. That is, the game is directed to a fighting game in which the first user A controls the first character among the characters that can be controlled in the game and plays against the second character (which can also be the first character) controlled by the second user B.

FIG. 1 shows an example of an online fighting game in which the user A uses a gaming terminal 200a to play against the user B that uses a gaming terminal 200b via the network 400. The information processing device 100 relays operation information indicating operations performed by the user A on the gaming terminal 200a to the gaming terminal 200b, and operation information indicating operations performed by the user B on the gaming terminal 200b to the gaming terminal 200a. Each gaming terminal 200 processes the game and displays the game screen on the monitor on the basis of the transmitted operation information of the opponent and the operation information entered to its own terminal. The information processing device 100 may process games on the basis of the operation information performed on each gaming terminal 200, provide game screens to the respective gaming terminals 200, and each gaming terminal 200 may display the provided game screens.

Online matches between the users are performed via the information processing device 100, thereby storing, in the information processing device 100, situation information indicating a situation during each match and corresponding operation information of the user for each user.

In online competitions, users may be unable to play against each other even if they wish to, since they cannot play unless the user they wish to play against is online. Accordingly, the information processing device 100 according to the present embodiment generates a CPU character that has learned the operations of the other user designated by the user, and provides the user with a game against the CPU character. Especially, in the present embodiment, a designation of a plurality of other users is accepted from a user, and a CPU character that has learned operations of the other users is generated. This provides, in comparison to a CPU character learned from a single user alone, a stronger CPU character that compensates for weaknesses of the single user, thereby providing a CPU character that serves as a better practice opponent for the user.

A detailed description thereof will be given. In the present embodiment, the description mainly focuses on processing in which a designation of a plurality of other users is accepted from a user, a behavior model learned from operations of the other users is generated, and the behavior model is provided to the user. Accordingly, description of processing normally performed in a fighting game (e.g., receiving a kick execution input, causing a character to perform a kick action, and performing hit determination processing for an opponent of the kick) is omitted.

### Configuration

### Configuration of Information Processing Device 100

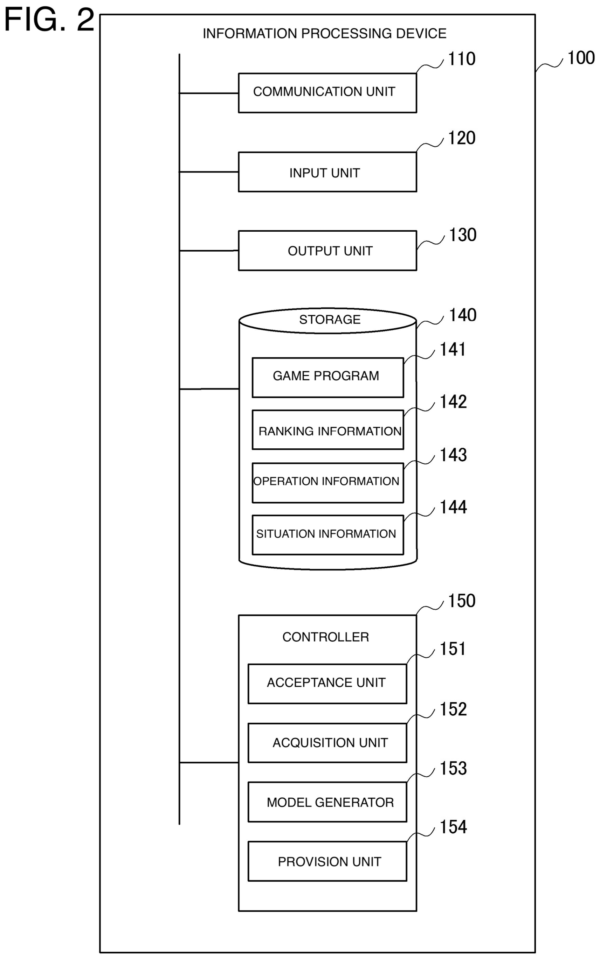

FIG. 2 shows a block diagram illustrating an example of a configuration of the information processing device 100. As shown in FIG. 2, the information processing device 100 includes a communication unit 110, an input unit 120, an output unit 130, a storage 140, and a controller 150. The information processing device 100 may correspond to a server device as a computer system configured as a game server providing online fighting games and including a memory and a processor.

The communication unit 110 corresponds to a communication interface that communicates and exchanges information with other information processing devices outside the information processing device 100. The communication unit 110 may communicate with other information processing devices, i.e., the gaming terminal 200, to receive information needed for the game execution and communicate it to the controller 150. The communication unit 110 may also transmit to another information processing device (gaming terminal 200B) information needed for the other information processing device (gaming terminal 200) to execute the game in accordance with instructions from the controller 150. When the information processing device 100 communicates with the other information processing device via the network to provide game screens, the communication unit 110 may, as an example, accept and communicate to the controller 150 the input for the game transmitted from the other information processing device. As an example, the communication unit 110 may transmit game-related information (e.g., user operation information entered for the game) to the other information processing device in accordance with the instructions from the controller 150.

The input unit 120 accepts input related to the game from the user of the information processing device 100 (e.g., system operator) and communicates the accepted input to the controller 150. As an example, the input unit 120 may be embodied by a mouse, touchpad, keyboard, gamepad, joystick, and arcade controller, for example, but is not limited to these.

The output unit 130 serves to output the information specified by the controller 150. The output unit 130 may be embodied, for example, by a monitor provided in or connected to the information processing device 100. The output unit 130 may be embodied, for example, by speakers installed in the information processing device or speakers or earphones connected to the information processing device 100. The output unit 130 may output images showing the game screen or output sounds related to the game (e.g., background music for the game or voices of characters) in accordance with the instructions from the controller 150.

The storage 140 serves to store programs and various data needed by the information processing device 100 to operate. The storage 140 may be embodied by a storage medium such as an HDD, SSD, and flash memory, for example. The storage 140 may include RAM and ROM. The storage 140 stores the game program 141 and ranking information 142. The game program 141 is directed to a computer program that provides a fighting game to the user, and may be a program that describes information for operating each character, game actions and methods for determining whether they can be performed. The game program 141 may also include a program that generates a behavior model that learns the operation information of a plurality of other users as specified by the user. The ranking information 142 corresponds to information that indicates a rank set for the user on the basis of the winning percentage in an online match in the game. Details of the ranking information 142 will be described below. The storage 140 also associates and stores the operation information 143 of each user in the fighting game and the situation information 144 indicating the situation of the game at the time of the operation with the identification information of the user.

The controller 150 is directed to a processor configured to control the portions of the information processing device 100. The controller 150 executes various programs using various data stored in the storage 140 to embody the functions to be embodied by the information processing device 100. The execution of the game program 141 allows the controller 150 to provide users with games embodied by the game program 141, especially fighting games that are playable online.

The controller 150 serves as an acceptance unit 151, an acquisition unit 152, a model generator 153, and a provision unit 154. The acceptance unit 151, acquisition unit 152, model generator 153, and provision unit 154 may be functions embodied by executing the game program 141.

The acceptance unit 151 accepts a designation of a plurality of other users to play against in a fighting game. The acceptance unit 151 accepts information indicating a plurality of other users designated by the user of the gaming terminal 200 via the communication unit 110, i.e., information capable of uniquely identifying each of the other users (e.g., user handle name, user ID, and ranking at that time). The acceptance unit 151 communicates the accepted information of the other users to the acquisition unit 152. Here, the other users that are accepted correspond to those where operation information thereof is subject to learning.

The acquisition unit 152 acquires, for each of the other users, operation information 143 on operations performed on an operation target by the other user during a match in the fighting game, and situation information 144 indicating a situation in the fighting game at the time of the operations. The target of the operation of the user user is directed to a character that the other user is using in the fighting game. The other users may be directed to users operating the same character. The situation information may correspond to information that indicates a situation of the game and enables identification of factors leading to the operation. For example, the situation information may include, in a fighting game, a position (on the ground or in the air) of a character operated by another user within a screen (or within a game field), a position (on the ground or in the air) of an opponent character within the screen (or within the game field) at that time, a movement of the opponent character at that time (during a predetermined time period up to when the operation is performed), a remaining health value of the character operated by the other user, a remaining health value of the opponent character, a remaining time when a time limit is set for the match, an amount of a gauge needed for using a special move, and a current number of wins and losses as well as a current time of match when matches are performed multiple times. However, the situation information is not limited thereto, and some of the above information may be used or need not be used. The acquisition unit 152 acquires the operation information 143 and the associated status information 144 stored in the storage 140. The acquisition unit 152 may acquire the operation information 143 and the status information 144 from the gaming terminal 200 of the other target user. The acquisition unit 152 communicates the acquired operation information 143 and the situation information 144 associated with the operation information 143 to the model generator 153.

The model generator 153 learns the operation information and situation information to generate a behavior model that causes the operation target to act using artificial intelligence (AI). The model generator 153 uses the combination of the operation information 143 and situation information 144 of the other users communicated from the acquisition unit 152 as teacher data for learning. Neural networks may be used for learning as an example, but the learning is not limited to these. The teacher data for the other users may be evenly learned for each, e.g., the same number of teacher data may be learned for all of the other users. This allows the model generator 153 to learn what the other users are likely to input in various situations and generate behavior models that cause the CPU character to behave accordingly. The model generator 153 may store the generated behavior model in the storage 140.

The behavior model generated by the model generator 153 may be on the basis of a basic behavior policy that the character as an operation target has in advance. That is, the model generator 153 may generate a behavior model that is re-learned with the operation and situation information of the other users designated by the user for the behavior model as the basic behavior policy.

The provision unit 154 provides a match against an operation target that behaves in accordance with the behavior model. The provision unit 154 may transmit the behavior model generated by the model generator 153 to the gaming terminal 200 of the user, and the gaming terminal 200 may provide a match against a CPU character played by another user as an operation target operating in accordance with the behavior model. When the information processing device 100 is to provide a game screen, the provision unit 154 provides a screen where the controller 150 of the information processing device 100 operates the CPU character in accordance with the behavior model generated by the model generator 153 to play against the user.

The example of the configuration of the information processing device 100 has been as described above.

### Configuration of Gaming Terminal 200

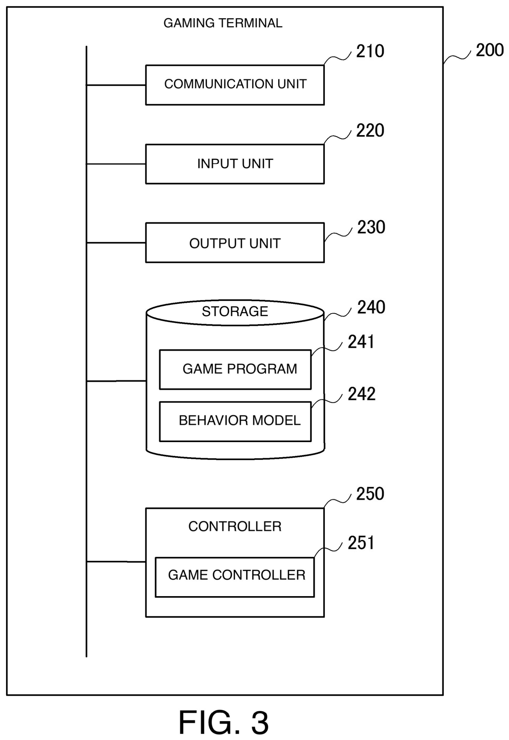

FIG. 3 shows a block diagram illustrating an example of a configuration of the gaming terminal 200. The gaming terminal 200 includes a communication unit 210, an input unit 220, an output unit 230, a storage 240, and a controller 250. The gaming terminal 200 may be a dedicated gaming terminal or a PC.

The communication unit 210 corresponds to a communication interface that communicates and exchanges information with other information processing devices 100 outside the gaming terminal 200. The communication unit 210 communicates with the information processing device 100 via the network 400 and exchanges information needed for the execution of the game. As an example, the communication unit 210 may transmit game-related information (e.g., operation information entered for the game by the user) to the information processing device 100 in accordance with the instructions from the controller 250.

The input unit 220 accepts game-related input from the user of the information processing device 100 and communicates the accepted input to the controller 250. As an example, the input unit 220 may be embodied by a mouse, touchpad, keyboard, gamepad, joystick, and arcade controller, for example, but is not limited to these. The input unit 220 accepts the input of the operation information (information indicating the direction in which the character should proceed and the content of actions such as punching and kicking) for the character operated by the user and transmits it to the controller 250.

The output unit 230 serves to output the information specified by the controller 250. The output unit 230 may be embodied, for example, by a monitor provided in the gaming terminal 200 or connected to the gaming terminal 200. The output unit 230 may be embodied, for example, by speakers installed in the gaming terminal 200 or speakers or earphones connected to the gaming terminal 200. The output unit 230 may, in accordance with the instructions from the controller 250, output an image indicating a game screen of a fighting game and audio related to the game (e.g., background music and character voices for the game).

The storage 240 serves to store programs and various data needed by the gaming terminal 200 to operate. The storage 240 may be embodied by a storage medium such as an HDD, SSD, and flash memory, for example. The storage 240 may include RAM and ROM. The storage 240 may store the game program 241 and the behavior model 242. The game program 241 is directed to a computer program that provides a fighting game to the user, and may be a program that describes information for operating each character, game actions and methods for determining whether they can be performed. The behavior model 242 is directed to a behavior model generated by the information processing device 100 as a model that has learned the operation information of the other users designated by the user of the gaming terminal 200, which causes the character to behave in accordance with various situations in the fighting game.

The controller 250 is directed to a processor that controls various portions of the gaming terminal 200. The controller 250 executes various programs using various data stored in the storage 240 to embody the functions to be embodied by the gaming terminal 200. The execution of the game program 241 allows the controller 250 to provide users with games embodied by the game program 241, especially fighting games that are playable online.

The controller 250 includes a game controller 251, and the game controller 251 executes the game program 241 to provide a user of the gaming terminal 200 with a fighting game.

The example of the configuration of the gaming terminal 200 has been as described above.

### Data

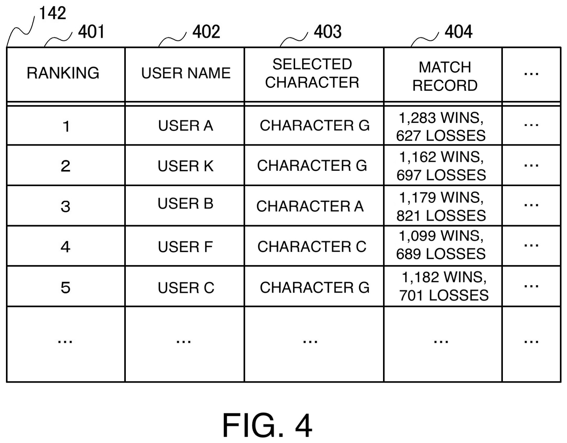

FIG. 4 shows a conceptual data diagram illustrating an example of ranking information 142.

As shown in FIG. 4, the ranking information 142 is directed to information in which a ranking 401, user name 402, selected character 403, and match record 404 are associated with one another.

The ranking 401 is directed to information that indicates the ranking on the basis of the results of online matches. A higher ranking 401 (i.e., a smaller numerical value) may indicate a higher skill level of the player.

The user name 402 is directed to identification information that identifies the user located in the corresponding ranking 401. The user name 402 may be a handle name given by the user himself/herself, or it may be an actual name of the user, or it may be a user identifier (ID) automatically assigned by the information processing device 100. The user name 402 is directed to information that uniquely identifies the user on the game system.

The selected character 403 is directed to information indicating the character selected in a fighting game by the user indicated by the corresponding user name 402. The ranking information may be registered for each character in use. Accordingly, different selected characters 403 are registered under the same user name 402, and thus, for example, the second and third places in the ranking may be occupied by the same user.

The match record 404 shows the results of matches played by the user indicated by the corresponding user name 402 using the character indicated by the corresponding selected character 403. In the ranking information 142, the higher the winning percentage on the basis of the match record 404 is, the higher the ranking is. In the case of a tie, a plurality of users with the same ranking may exist, or a user with information other than the match record, e.g., the user with the shorter total time in the matches may be ranked higher. Although not shown in FIG. 4, the match record 404 may also include draws.

In the example shown in FIG. 4, the user name 402 of which ranking 401 is the "3rd" is "User B," the selected character 403 is "Character A," and the match record 404 is "1179 wins, 821 losses."

The ranking information 142 may be updated by the information processing device 100 each time a match is played, and if the ranking is changed at that time, the information corresponding to the ranking 401 is replaced.

Here, the ranking information 142 is shown in the form of a mixture of characters operated by the user, but the ranking information 142 may be provided for each character that can be operated in a fighting game.

The user selects a plurality of other users operating the same character from the ranking screen displayed on the basis of the ranking information 142 on the monitor of the gaming terminal 200, and the information processing device 100 generates a behavior model that has learned the operation information of the selected other users.

### Operation

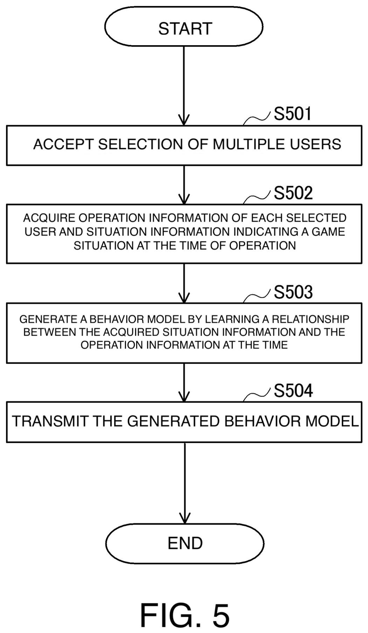

FIG. 5 shows a flowchart illustrating an example of an operation of the information processing device 100 in generating a behavior model.

As shown in FIG. 5, the acceptance unit 151 of the information processing device 100 accepts, from the communication unit 110, a selection of a plurality of other users (step S501). The other users are directed to other users selected by the user of the gaming terminal 200. The acceptance unit 151 communicates the information of the other users from the communication unit 110 to the acquisition unit 152.

The acquisition unit 152 acquires, on the basis of the communicated information of the other users (user identification information), the operation information 143 and the situation information 144 corresponding to the respective other users from the storage 140 (step S502). The acquisition unit 152 communicates the acquired operation information 143 and situation information 144 to the model generator 153.

The model generator 153 learns a pair of the received operation information 143 and situation information 144 as teacher data and generates a behavior model for the character to behave on the basis of the operation information of the other users (step S503). The model generator 153 communicates the generated behavior model to the provision unit 154.

The provision unit 154 transmits the received behavior model via the communication unit 110 to the gaming terminal 200 that has transmitted the information of the other users (step S504), and terminates the process. This allows the gaming terminal 200 to provide a CPU character that operates in accordance with the behavior model learned from operation habits of the other users selected by the user to allow the user to play against the CPU character.

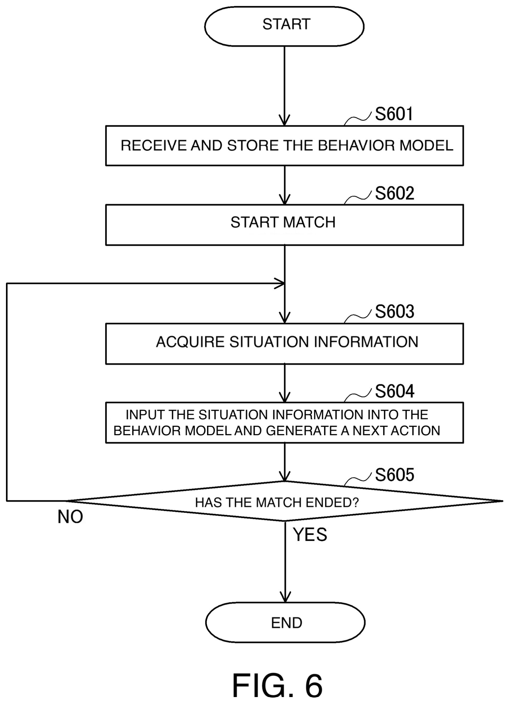

FIG. 6 shows a flowchart illustrating an example of an operation of the gaming terminal 200 in which a user plays against a CPU character that has learned the operations of a plurality of other users. The description here assumes that the CPU character is operated on the gaming terminal 200, but a CPU character operating in accordance with the generated behavior model may be processed by the information processing device 100 and provided as a game screen on the monitor of the gaming terminal 200.

As shown in FIG. 6, the communication unit 210 of the gaming terminal 200 receives the behavior model from the information processing device 100 via the network 400. The communication unit 210 communicates the received behavior model to the controller 250, and the controller 250 stores the received behavior model in the storage 240 (step S601).

The game controller 251 of the controller 250 accepts an input from the user of the gaming terminal 200 to play against the CPU character and starts a match between the character operated by the user and the CPU character that operates in accordance with the behavior model (step S602).

The game controller 251 periodically (for example, every 0.1 seconds, but not limited thereto) acquires the situation information indicating a game situation from the content of the fighting game (step S603). The situation information to be acquired is set in advance, and as the game progresses, the game controller 251 acquires parameters corresponding to the respective items of the situation information.

The game controller 251 enters the acquired situation information into the behavior model to generate the next action (operation information) to be performed by the CPU character (step S604). The CPU character is then caused to take the generated action.

The game controller 251 determines whether the match has ended (step S605), and if the match has not ended (NO in step S605), the process returns to step S603, and if the match has ended (YES in step S605), the game process is terminated. The end of a match is determined based on whether a health value of the user character or the CPU character reaches zero, or, when a time limit is set for the match, whether the remaining time reaches zero.

This allows the user of the gaming terminal 200 to play against a CPU character that has learned the operation information of the other users selected by the user, and even if a desired user is not online, the user of the gaming terminal 200 can play against a CPU character that may be stronger than that desired user.

### Summary

As shown above, the information processing device 100 is capable of learning operations that have been performed by a plurality of other users operating the same character selected by the user, and generating a behavior model that causes a CPU character operated by a computer to play against the user. A plurality of other users are selected rather than a single other user so that behaviors of a plurality of users those the user considers skillful in the game can be combined, thereby implementing a match against a CPU character that performs better than a CPU character imitating a single user and improving the skill if the user in the game.

### Variations

Although one embodiment of the present invention has been described above, the present invention is not limited thereto. Various variations included as the ideas of the present invention will be described below.

(1) In the above embodiment, the behavior model generated by the model generator 153 of the information processing device 100 learns a relationship between the operation information of a plurality of other users and corresponding situation information, and derives, on the basis of the other users as a whole, actions that are highly likely to be taken in various situations. In this case, in the above embodiment, the model generator 153 equally learns the combinations of the situation information and operation information of a plurality of other users as teacher data; however, learning may be performed by assigning weights to the respective other users. That is, the distribution (specific weight) of the teacher data to be learned among the other users may be different.

For example, if the user selects three users, user A, user B, and user C as the other users, the model generator 153 may perform learning with a ratio of 5:3:2 for the numbers of pieces of the teacher data for user A: user B: user C. This ratio may be set by the user when the user selects the other users. That is, the user may specify, for a CPU character to be generated by the information processing device 100, which user among the other users should have a stronger influence on the behavior of the CPU character.

In addition to merely specifying the ratios, the user may also be able to specify weighting in accordance with the situation in the match. That is, when the user selects the other users, the user may specify, for each situation (i.e., for each piece of situation information), which action (operation information) of a user should be prioritized when the same or similar situation occurs for user A and user B. That is, the model generator 153 may generate a behavior model such that, when a situation A occurs, an operation of user A is more likely to be performed, and when a situation B occurs, an operation of user B is more likely to be performed, on the basis of a designation by the user. Accordingly, a CPU character that combines strengths (or even weaknesses) of each of the other users can be provided.

As described above, with respect to a behavior model generated using the operation information of the other users, a CPU character in a form more desired by the user can be provided by generating the behavior model with an allocation specified by the user.

(2) In the above embodiment, the information processing device 100 generates the behavior model, but the gaming terminal 200 may possess that function. In this case, the gaming terminal 200 may be configured to acquire, via the network 400, operation information and situation information of a user as a target for which a behavior model is to be generated, from the information processing device 100 or the gaming terminal 200 of the user to generate the behavior model.

(3) In the above embodiment, although not specifically described, matches between the CPU characters operating on the basis of the generated behavior models may be performed, and the user may observe the matches. The gaming terminal 200 may be configured to allow a user to select herself or himself as one of the other users.

(4) In the above embodiment, a fighting game is used as an example of a game, but the game is not limited to the fighting game. In recent years, various games can be enjoyed online among users, and such games may also be employed as games according to the present embodiment. That is, the game is not limited to a fighting game if it includes an element in which characters operated by users (or users) compete against each other. For example, the games may be of another genre, such as a first-person shooter (FPS), a massively multiplayer online role-playing game (MMORPG), a card game, or a board game.

In the case of the FPS or the MMORPG, situation information may include, for example, equipment items and consumable items possessed by a user, a screen viewed by the user, and an opponent against which the user is competing, and operation information corresponding to operations performed by the user at that time may be learned. In the present embodiment, the model generator 153 generates a behavior model by learning a relationship between the situation information and operation information of the other users.

In the case of the card game, the model generator 153 may treat, as the situation information, contents and numbers of cards possessed by the user at that time, contents and numbers of cards visible on the field, and numbers of cards possessed by an opponent. The model generator 153 may learn, as the operation information, actions taken by the user at that time, and generate a behavior model. In this case as well, a relationship between the situation information and operation information of the other users is learned.

In the case of the board game, the model generator 153 may treat, as the situation information, contents and quantities of resources possessed by the user at that time, contents and quantities of resources visible on a game board, effects of the game board on the game, and contents and quantities of resources possessed by an opponent. The model generator 153 may learn, as the operation information, actions taken by the user at that time, and generate a behavior model. In this case as well, a relationship between the situation information and operation information of the other users is learned.

The game is not limited to the above, and may be, for example, a sports game or a racing game.

(5) In the above embodiment, the other users are designated via the ranking information 142; however, the present disclosure is not limited thereto. The other users may be designated on the basis of user names and user IDs, for example, directly received from the user.

(6) In the above embodiment, the user of the gaming terminal 200 may be able to further customize the generated behavior model. For example, an activation rate (usage frequency) of a predetermined special move in the generated behavior model may be changed, or a probability of selecting a specific action may be reduced. The information processing device 100 may modify the behavior model in accordance with such customization and provide the user with the modified behavior model.

(7) In the above embodiment, the behavior model generated on the basis of the designation of the user may be registered in the information processing device 100 for use by other users. This allows the other users to enjoy playing against a CPU character that operates in accordance with the generated behavior model.

(8) In the above embodiment, each user may select and set whether to disclose his or her operation information. A user that does not wish his or her play style to be analyzed may set the operation information to be private, thereby limiting countermeasures by other users.

(9) In the above embodiment, the functional units of the information processing device 100 may be implemented by a logic circuit (hardware) or a dedicated circuit formed on an integrated circuit (IC) chip, and a large-scale integration (LSI), for example, or may be implemented by software using a central processing unit (CPU) and a memory. Each functional unit may be implemented by one or more integrated circuits, and the functions of multiple functional units may be implemented by a single integrated circuit. LSIs are sometimes called VLSIs, Super LSIs, and Ultra LSIs, for example, depending on the level of integration. The term "circuit" may include the meaning of digital processing by a computer, i.e., as a functional process by software. The circuit may also be implemented by a reconfigurable circuit such as a field programmable gate array (FPGA).

When the functional units of the information processing device 100 are implemented by software, the information processing device 100 may include a central processing unit (CPU) that executes instructions of an information processing program that is software for implementing the functions, a read-only memory (ROM) or a storage device (these are referred to as "recording media") in which the information processing program and various data are recorded to be readable by a computer (or a CPU), and a random access memory (RAM) in which the information processing program is developed, for example. The object of the present invention is achieved by a computer (or CPU) reading and executing the above information processing program from the above recording media. As the recording media above, "non-transient tangible media" such as tapes, disks, cards, semiconductor memory, and programmable logic circuits may be used. The information processing program above may be supplied to the computer above via any transmission medium (e.g., communication network and broadcast wave) capable of transmitting the information processing program. The invention can also be embodied in the form of data signals embedded in a carrier wave, in which the information processing program above is embodied by electronic transmission.

The information processing program described above may be implemented using, for example, scripting languages such as ActionScript and JavaScript (registered trademark), object-oriented programming languages such as C++, Objective-C, and Java (registered trademark), or markup languages such as HTML5, but is not limited thereto. For example, Ruby or Python may be used.

(10) The various configurations and aspects described in the above embodiment may be combined as appropriate within a scope consistent with an objective of generating a behavior model learned from operations of the other users and providing a CPU character that operates in accordance with the behavior model to compete with the user.

### Description of Reference Numerals

100: Information Processing Device
110: Communication Unit
120: Input Unit
130: Output Unit
140: Storage
150: Controller
151: Acceptance Unit
152: Acquisition Unit
153: Model Generator
154: Provision Unit
200: Gaming Terminal
210: Communication Unit
220: Input Unit
230: Output Unit
240: Storage
250: Controller
251: Game Controller
400: Network

## Claims

1. An information processing device (100) comprising:
an acceptance unit (151) configured to accept designation of a plurality of other users for a match in a fighting game;
an acquisition unit (152) configured to acquire, for each of the other users, operation information regarding an operation performed by the user on an operation target during the match in the fighting game, and situation information indicating a situation in the fighting game at a time of the operation;
a model generator (153) configured to learn the operation information and the situation information to generate a behavior model that causes the operation target to act using AI; and
a provision unit (154) configured to provide a match against the operation target that acts in accordance with the behavior model.

2. The information processing device (100) according to claim 1, wherein
the fighting game is a fighting game in which a first user operates a first character and plays against a second character operated by a second user, and
a character serving as the operation target for each of the other users is the same character.

3. The information processing device (100) according to claim 2, wherein
the character as the operation target has a basic behavior policy, and
the model generator (153) generates the behavior model by performing learning in which operation information and situation information of each of the other users are added to the basic behavior policy.

4. The information processing device (100) according to claim 1, wherein the acceptance unit (151) accepts, from one user, the designation of the other users from ranking information (142) on the basis of a match record in the fighting game.

5. The information processing device (100) according to claim 4, wherein
the acceptance unit (151) accepts, from the one user, specific weights for the other users, and
the model generator (153) performs the learning according to the specific weights.

6. An information processing method causing a computer to execute the steps of:
accepting designation of a plurality of other users for a match in a fighting game;
acquiring, for each of the other users, operation information regarding an operation performed by the user on an operation target during the match in the fighting game, and situation information indicating a situation in the fighting game at a time of the operation;
generating a behavior model that causes the operation target to act using AI by learning the operation information and the situation information; and
providing a match against the operation target that acts in accordance with the behavior model.

7. An information processing program causing a computer to embody the functions of:
accepting designation of a plurality of other users for a match in a fighting game;
acquiring, for each of the other users, operation information regarding an operation performed by the user on an operation target during the match in the fighting game, and situation information indicating a situation in the fighting game at a time of the operation;
generating a behavior model that causes the operation target to act using AI by learning the operation information and the situation information; and
providing a match against the operation target that acts in accordance with the behavior model.
